# EUROPÄISCHE PATENTANMELDUNG

(11) **EP 1 688 579 A2**
(43) Veröffentlichungstag der Anmeldung: **09.08.2006**
(21) Anmeldenummer: 06100352.1
(22) Anmeldetag: 15.01.2006
(51) Int. Cl.: E06B 9/17

(54) **Fenstersturz, Unterputzdose, und Führungsvorrichtung für ein Rolladensystem**

(30) Priorität: 16.01.2005 DE 102005002219
(71) Anmelder: DiHa GmbH, 89361 Landensberg (DE); Roma Rolladensysteme GmbH, 89331 Burgau (DE); Beck & Heun GmbH, Industriestrasse 9 86450 Altenmünster-Hennhofen (DE)
(72) Erfinder: Wetzstein, Konrad, 86502 Laugna / Osterbuch (DE); Kempter, Anton, 89361 Landensberg (DE); Pfaudler, Volker, 89349 Burtenbach (DE); Wittler, Jens, 86450 Altenmünster-Hegnenbach (DE); Beck, Bernd, 35794 Mengerskirchen (DE); Ziemer, Sebastian, 98574 Schmalkhalden (DE)
(74) Vertreter: Jannig, Peter

(57) **Zusammenfassung**

Es werden ein Fenstersturz, eine Unterputzdose, und eine Führungsvorrichtung für ein Rolladensystem beschrieben. Der beschriebene Fenstersturz zeichnet sich dadurch aus, daß er zumindest teilweise durch ein aus Kunststoff bestehendes Formteil gebildet wird. Die beschriebene Unterputzdose ist eine Unterputzdose für die Elektroinstallation und zeichnet sich dadurch aus, daß in sie ein Kanal integriert ist, über welchen ein Gurt oder eine Kette durch sie hindurchführbar ist. Die beschriebene Führungsvorrichtung ist eine Führungsvorrichtung, über welche ein Rolladengurt oder eine Kette durch eine Wandöffnung hindurch in einen Rolladenkasten führbar ist, wobei an dem dem Rolladenkasten zugewandten Ende der Führungsvorrichtung eine vom Rolladengurt oder der Kette durchlaufene Austrittsöffnung vorgesehen ist, und zeichnet sich dadurch aus, daß die Austrittsöffnung Bestandteil eines Justierelementes ist, welches relativ zum Rest der Führungsvorrichtung verschiebbar ist.

## Beschreibung

Die vorliegende Erfindung betrifft im weitesten Sinne das Thema Rolläden, genauer gesagt
- einen Fenstersturz gemäß dem Oberbegriff des Patentanspruchs 1, d.h. einen Fenstersturz insbesondere für ein Rolladensystem, bei welchem der Rolladenkasten vor das Fenster in die Laibung gesetzt wird, mit einer Aussparung zur Aufnahme wenigstens eines Teils des Rolladenkastens,
- eine Unterputzdose gemäß dem Oberbegriff des Patentanspruchs 16, d.h. eine Unterputzdose für die Elektroinstallation, mit einer von vorne zugänglichen Kammer, in welche von der Seite und/oder von hinten elektrische Leitungen hineinführbar sind, und
- eine Führungsvorrichtung gemäß dem Oberbegriff des Patentanspruchs 20, d.h. eine Führungsvorrichtung, über welche ein Rolladengurt oder eine Kette durch eine Wandöffnung hindurch in einen Rolladenkasten führbar ist, wobei an dem dem Rolladenkasten zugewandten Ende der Führungsvorrichtung eine vom Rolladengurt oder der Kette durchlaufene Austrittsöffnung vorgesehen ist.

In letzter Zeit erfreuen sich die sogenannten Vorbau-Rolladensysteme immer größerer Beliebtheit. Bei Vorbau-Rolladensystemen sind die Rolladenkästen - anders als bei den am weitesten verbreiteten Aufbau-Rolladensystemen - nicht oder jedenfalls nicht vollständig in den Sturz des Fensters integriert, für welches der Rolladen bestimmt ist. Rolladenkästen für Vorbau-Rolladenysteme werden vielmehr von außen vor das Fenster in die Laibung gesetzt. Die Rolladenkästen kommen hierbei teilweise in einer im Fenstersturz vorgesehenen Aussparung zu liegen.

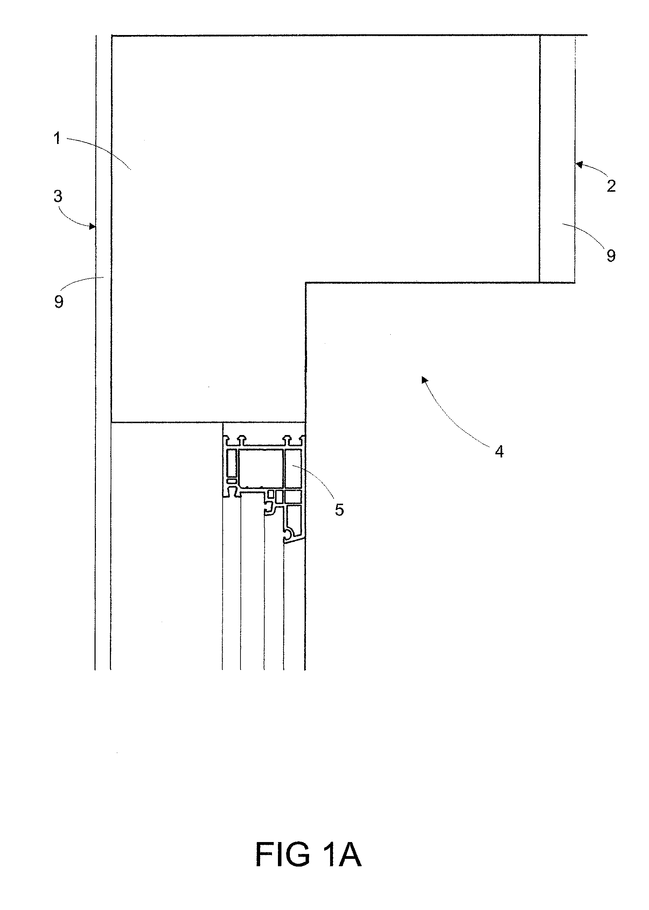

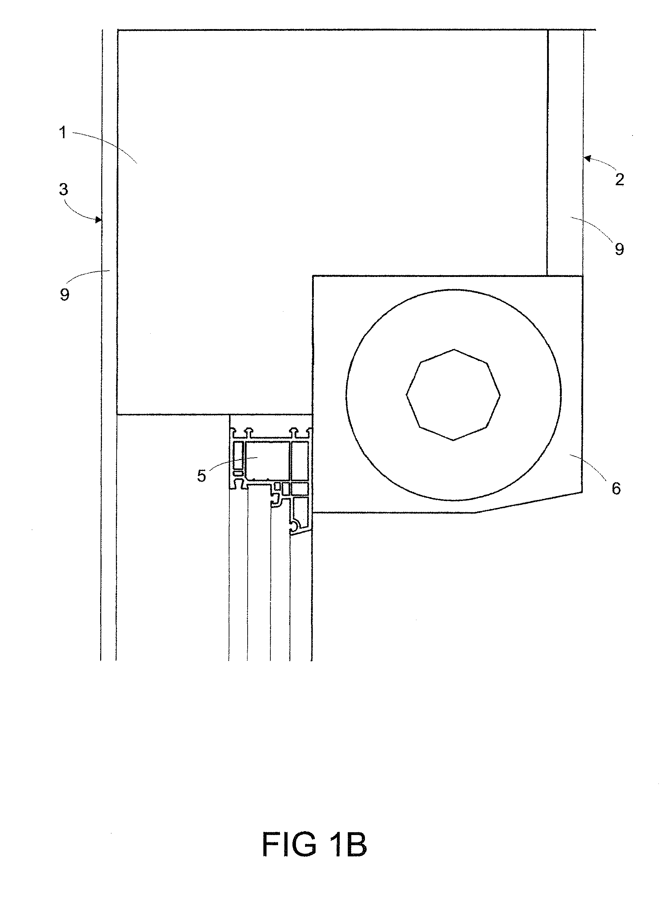

Dies ist schematisch in den Figuren 1A und 1B veranschaulicht. Die Figur 1A zeigt eine seitliche Schnittansicht durch den Fenstersturz zur Veranschaulichung der Lage der Aussparung im Fenstersturz, und Figur 1B zeigt den Zustand, in welchem in diese Aussparung ein Rolladenkasten eingesetzt ist. Dabei bezeichnen das Bezugszeichen 1 den Fenstersturz, das Bezugszeichen 2 die Wandaußenseite, das Bezugszeichen 3 die Wandinnenseite, das Bezugszeichen 4 die im Fenstersturz 1 vorgesehene Aussparung, das Bezugszeichen 5 einen Fensterrahmen, das Bezugszeichen 6 den Rolladenkasten, und das Bezugszeichen 9 an der Wandaußenseite 2 und der Wandinnenseite 3 aufgebrachte Putzschichten. Wie insbesondere aus der Figur 1B ersichtlich ist, sind die Lage und die Größe der Aussparung 4 im allgemeinen so gewählt,
- daß die Rückseite der Aussparung 4 und die Außenseite des Fensterrahmens 5 eine zusammenhängende ebene Fläche bilden,
- daß die Oberseite der Aussparung 4 so angeordnet ist, daß der in die Aussparung 4 eingesetzte Rolladenkasten 6 den Fensterrahmen 5 teilweise bedeckt, und
- daß sich die Aussparung 4 von der linken Fensterbrüstung bis zur rechten Fensterbrüstung erstreckt (der Rolladenkasten 6 weist eine dem gegenseitigen Abstand der Fensterbrüstungen entsprechende Breite auf).

Bei dem in der Figur 1B gezeigten Beispiel weist der Rolladenkasten 6 eine Tiefe auf, daß die außen liegende Seite desselben bündig mit der verputzten Wandaußenseite 2 abschließt. Der Vollständigkeit halber sei darauf hingewiesen, daß dies nicht so sein muß und insbesondere von der Dicke der Mauer, der Lage des Fensterrahmens, und der Tiefe des Rolladenkastens abhängt. Die außen liegende Seite des Rolladenkastens kann auch weiter innen oder weiter außen zu liegen kommen.

Vorbau-Rolladensysteme weisen gegenüber den "normalen", d.h. Aufbau-Rolladensystemen einige Vorteile auf. Insbesondere weisen die Fensterstürze 1 für Vorbau-Rolladensysteme bessere Wärmedämm- und Schalldämmeigenschaften auf. Darüber hinaus können die Rolladenkästen von Vorbau-Rolladensystemen als Gestaltungselemente für eine ansprechendere Gestaltung der Gebäude-Außenseite verwendet werden.

Vorbau-Rolladensysteme weisen aber auch diverse Nachteile auf. Beispielsweise ist die Herstellung des Fenstersturzes 1, genauer gesagt die Herstellung der darin vorgesehenen Aussparung 4 sehr aufwendig. Ferner kann das Führen des Rolladengurtes und/oder der elektrischen Leitungen (falls der Rolladen motorbetrieben ist oder später einmal auf Motorbetrieb umgerüstet werden soll) vom Gebäude-Inneren in den Rolladenkasten Probleme bereiten. Die Gurtführungsvorrichtung und/oder die Elektrodose werden nämlich in entsprechende Bohrungen durch den Festerrahmen 5 eingesetzt, was zu einer Schwächung des Fensterrahmens führt. Darüber hinaus muß zumindest die Gurtführungsvorrichtung möglichst exakt an einen vorgegebenen Stelle angeordnet werden; Abweichungen von der Idealposition können zu einem schnellen Verschleiß des Rolladengurtes und weiteren Problemen führen.

Der vorliegenden Erfindung liegt daher die Aufgabe zugrunde, Möglichkeiten zu finden, durch welche sich die für die Montage eines Vorbau-Rolladensystems zu treffenden Vorkehrungen und die Montage des Vorbau-Rolladensystems selbst vereinfachen und beschleunigen lassen.

Diese Aufgabe wird erfindungsgemäß durch den in Patentanspruch 1 beanspruchten Fenstersturz, die in Patentanspruch 16 beanspruchte Unterputzdose, und die in Patentanspruch 20 beanspruchte Führungsvorrichtung gelöst.

Durch den erfindungsgemäßen Fenstersturz, die erfindungsgemäße Unterputzdose, und die erfindungsgemäße Führungsvorrichtung lassen sich die für die Montage eines Vorbau-Rolladensystems zu treffenden Vorkehrungen und die Montage des Vorbau-Rolladensystems selbst erheblich vereinfachen und beschleunigen.

Vorteilhafte Weiterbildungen der Erfindung sind den Unteransprüchen, der folgenden Beschreibung, und den Figuren entnehmbar.

Die Erfindung wird nachfolgend anhand von Ausführungsbeispielen unter Bezugnahme auf die Figuren näher erläutert. Es zeigen
- Figur 1A: einen herkömmlichen Fenstersturz im über ein Fenster in eine Wand eingesetzten Zustand,
- Figur 1B: den Fenstersturz gemäß Figur 1A mit einem vorgesetzten Rolladenkasten,
- Figur 2A: den im folgenden beschriebenen Fenstersturz im über ein Fenster in eine Wand eingesetzten Zustand,
- Figur 2B: den Fenstersturz gemäß Figur 2A mit einem vorgesetzten Rolladenkasten und einer in den Fenstersturz eingesetzten Multifunktionsdose, wobei die Multifunktionsdose als Unterputzdose für die Elektroinstallation verwendet wird,
- Figur 2C: den Fenstersturz gemäß Figur 2A mit einem vorgesetzten Rolladenkasten und einer in den Fenstersturz eingesetzten Multifunktionsdose, wobei die Multifunktionsdose als Gurtführungsvorrichtung verwendet wird,

- Figur 2D: den Fenstersturz gemäß Figur 2A mit einem vorgesetzten Rolladenkasten und einer in den Fenstersturz eingesetzten Multifunktionsdose, wobei die Multifunktionsdose als Kettenführungsvorrichtung verwendet wird,
- Figur 3A: ein Draufsicht auf eine von zwei Halbschalen, aus welchen die Multifunktionsdose zusammengesetzt ist,
- Figur 3B: eine perspektivische Ansicht der in der Figur 3A gezeigten Halbschale,
- Figur 3C: eine perspektivische Ansicht der kompletten Multifunktionsdose, und
- Figur 3D: eine Draufsicht auf das dem Rolladenkasten zugewandte (hintere) Ende der Multifunktionsdose.

Im folgenden werden mehrere Möglichkeiten beschrieben, durch welche sich die für die Montage eines Vorbau-Rolladensystems zu treffenden Vorkehrungen und die Montage des Vorbau-Rolladensystems selbst vereinfachen und beschleunigen lassen. Die hier vorgestellten Möglichkeiten erweisen sich sowohl einzeln, und erst recht in Kombination als vorteilhaft.

Eine erste Möglichkeit, durch welche sich die für die Montage eines Vorbau-Rolladensystems zu treffenden Vorkehrungen und die Montage des Vorbau-Rolladensystems selbst vereinfachen und beschleunigen lassen, besteht in der Herstellung des Fenstersturzes 1 unter Verwendung eines im folgenden näher beschriebenen Formteils.

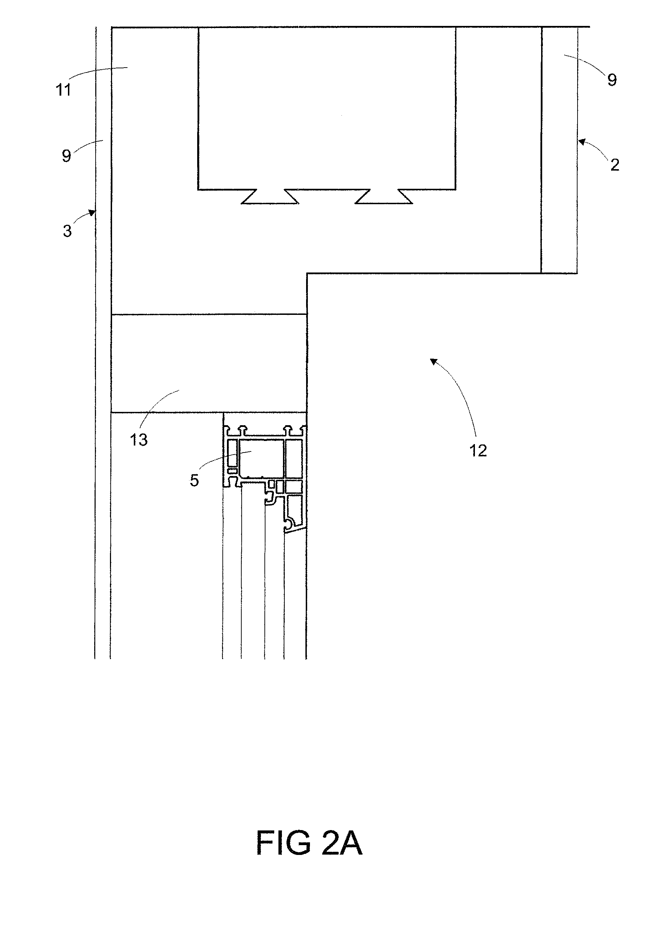

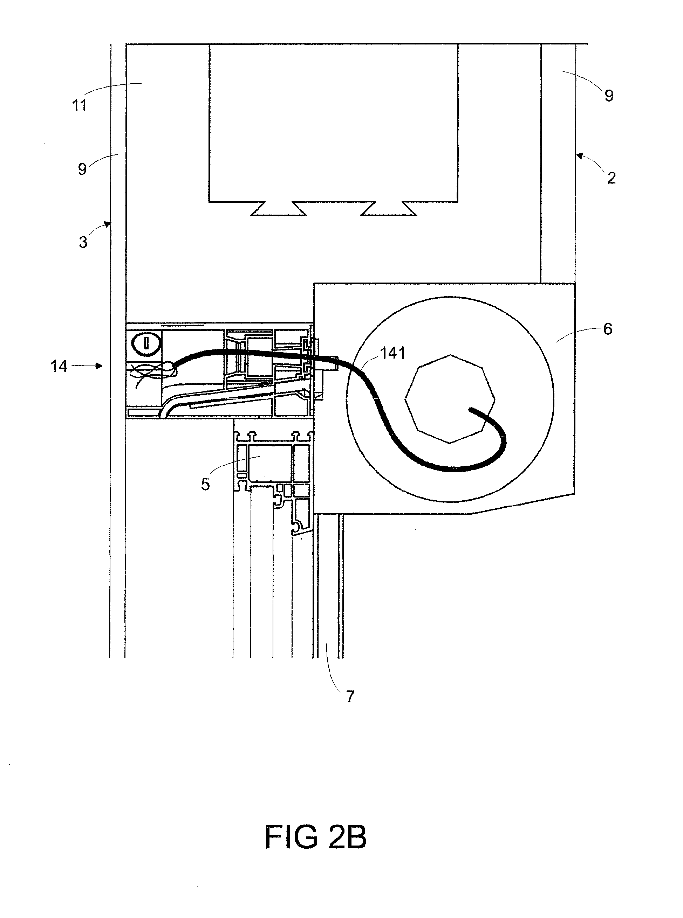

Das im folgenden beschriebene Formteil ist in den Figuren 2A bis 2D gezeigt. Die Figur 2A zeigt eine seitliche Schnittansicht durch einen unter Verwendung dieses Formteils hergestellten Fenstersturz, und Figuren 2B bis 2D zeigen den Zustand, in welchem an den Fenstersturz ein Rolladenkasten angebaut ist.

Die in den Figuren 2A bis 2D gezeigte Anordnung entspricht teilweise der in den Figuren 1A und 1B gezeigten Anordnung. Mit den gleichen Bezugszeichen bezeichnete Komponenten sind gleiche oder einander entsprechende Komponenten.

Das Formteil ist in den Figuren 2A bis 2D mit dem Bezugszeichen 11 bezeichnet. Es handelt sich im betrachteten Beispiel um ein U-Profil,
- dessen Breite größer ist als der gegenseitige Abstand der unverputzten Fensterbrüstungen,
- dessen Tiefe der Dicke der den Fenstersturz enthaltenden unverputzten Mauer entspricht, und
- dessen Höhe der Höhe eines oder mehrerer Steine, aus welchen die den Fenstersturz enthaltenden Mauer aufgebaut wird, und der Höhe der zwischen den Stein-Reihen vorgesehenen Mörtel- oder Kleberschichten entspricht.

Wie insbesondere aus der Figur 2A ersichtlich ist, weist das Formteil 11, genauer gesagt der horizontale Schenkel im unteren Bereich der der Wandaußenseite 2 zugewandten Seite eine Aussparung 12 auf. Die Form und die Größe dieser Aussparung 12 entspricht der Form und der Größe der Aussparung 4 des in den Figuren 1A und 1B gezeigten Fenstersturzes 1; die Breite der Aussparung 12 kann allerdings größer sein: um die Herstellung des Formteils 11 zu erleichtern, kann sich die Aussparung 12 über die gesamte Breite des Formteils 11 erstrecken. Wie insbesondere aus den Figuren 2B bis 2D ersichtlich ist, wird in diese Aussparung der Rolladenkasten 6 eingesetzt. Der Rolladenkasten 6 schlägt hierbei am Fensterrahmen 5, und den die Aussparung 12 begrenzenden Flächen des Formteils 11 an.

Das Formteil 11 enthält darüber hinaus eine oder mehrere weitere Aussparungen 13. Diese Aussparungen 13 sind Aussparungen, die sich von der der Wandinnenseite 2 zugewandten Seite des horizontalen Schenkels des Formteils 11 durch den horizontalen Schenkel hindurch in die Aussparung 12 erstrecken. Wie insbesondere aus den Figuren 2B bis 2D ersichtlich ist, dienen diese Aussparungen 13 zur Aufnahme einer Multifunktionsdose 14.

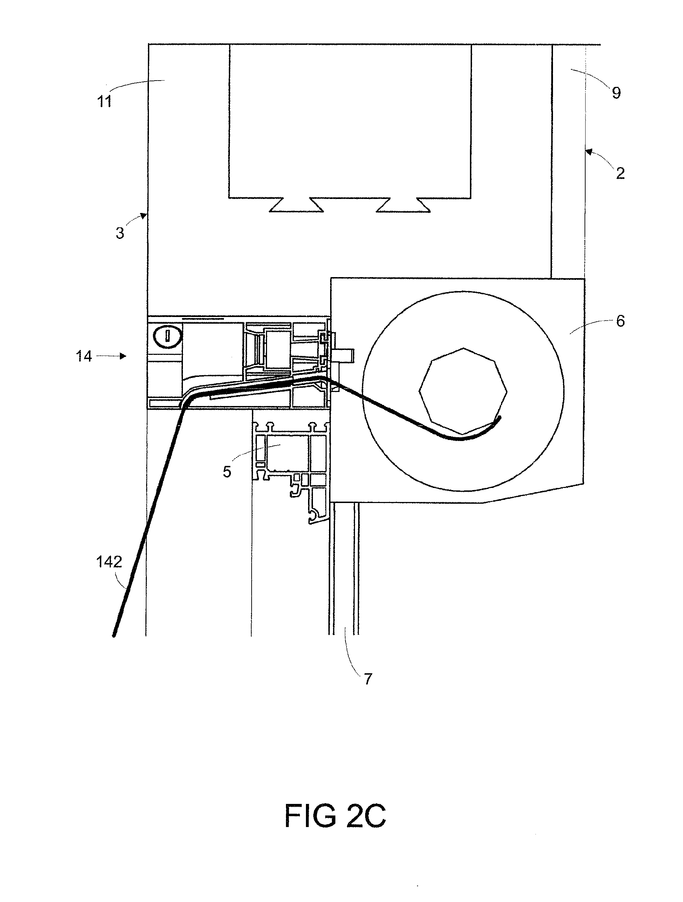

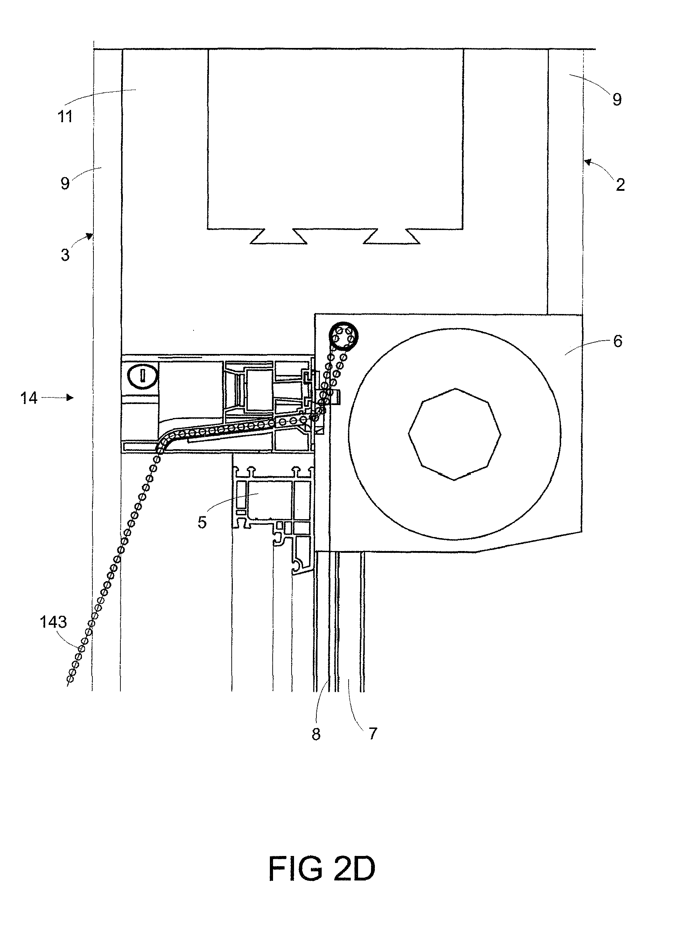

Die Multifunktionsdose 14 ist für unterschiedliche Zwecke einsetzbar, nämlich
- als eine im folgenden als Unterputzdose bezeichnete Anordnung, über welche von der Gebäude-Innenseite elektrische Leitungen 141 (siehe Figur 2B) durch den Fenstersturz 1 hindurch in den Rolladenkasten 6 geführt werden können, und/oder
- als eine im folgenden als Gurtführungsvorrichtung bezeichnete Anordnung, über welche von der Gebäude-Innenseite ein Gurt 142 (siehe Figur 2C) für die Bewegung eines im Rolladenkasten 6 enthaltenen Rolladens 7 durch den Fenstersturz 1 hindurch in den Rolladenkasten 6 geführt werden kann, und/oder
- als eine im folgenden als Kettenführungsvorrichtung bezeichnete Anordnung, über welche von der Gebäude-Innenseite eine Kette 143 (siehe Figur 2D) für die Bewegung eines im Rolladenkasten 6 enthaltenen Sonnenschutzrollos oder Insektenschutzgitters 8 durch den Fenstersturz 1 hindurch in den Rolladenkasten 6 geführt werden kann.

Die Verwendung der Multifunktionsdose 14 als Unterputzdose ist in Figur 2B veranschaulicht, die Verwendung der Multifunktionsdose 14 als Gurtführungsvorrichtung in Figur 2C, und die Verwendung der Multifunktionsdose 14 als Kettenführungsvorrichtung in Figur 2D. Der Aufbau der Multifunktionsdose 14 wird später noch genauer beschrieben.

Vorzugsweise enthält das Formteil 11 gleich zwei Aussparungen 13, wobei die erste Aussparung 13 so angeordnet ist, daß sie am linken Ende des Rolladenkastens 6 in diesen mündet, und wobei die zweite Aussparung 13 so angeordnet ist, daß sie am rechten Ende des Rolladenkastens 6 in diesen mündet. Vorzugsweise wird in jede der Aussparungen 13 eine Multifunktionsdose 14 eingesetzt. Dann kann beispielsweise die in die erste Aussparung 13 eingesetzte Multifunktionsdose 14 als Gurtführungsvorrichtung verwendet werden, und gleichzeitig die in die zweite Aussparung 13 eingesetzte Multifunktionsdose 14 als Kettenführungsvorrichtung verwendet werden, und gleichzeitig die in die erste Aussparung 13 eingesetzte Multifunktionsdose 14 und/oder die in die zweite Aussparung 13 eingesetzte Multifunktionsdose 14 als Unterputzdose für die Elektroinstallation verwendet werden.

Die Aussparungen 13 sind vorzugsweise so weit unten im Formteil 11 vorgesehen, daß die darin eingesetzte Multifunktionsdose 14 direkt auf dem Fensterrahmen 5 aufliegt.

Das Formteil 11 ist vorzugsweise aus einem leichten und gut wärmedämmenden Kunststoff wie beispielsweise Polystyrol hergestellt. In einer besonders bevorzugten Ausführungsform enthält das Polystyrol metallische Partikel, z.B. Graphitpartikel. Die Verwendung von metallische Partikel enthaltendem Polystyrol hat den Vorteil, daß eine noch bessere Wärmedämmung erreicht werden kann.

Das Formteil ist vorzugsweise einstückig hergestellt, beispielsweise aus einem größeren Polystyrol-Block herausgesägt.

Der zwischen den Schenkeln des Formteils 11 vorhandene Raum wird vorzugsweise mit Beton oder einem anderen Baustoff ausgefüllt. Hierbei können die vertikalen Schenkel des Formteils 11 gleich als Schalung verwendet werden.

Der Vollständigkeit halber sei angemerkt, daß das Formteil 11 nicht unbedingt ein U-Profil sein muß. Insbesondere (aber nicht ausschließlich) wenn sich unmittlbar über dem Formteil 11 eine Raumdecke anschließt, kann es sich als vorteilhaft erweisen, wenn der der Wandaußenseite 2 zugewandte vertikale Schenkel des Formteils 11 um die Dicke der Decke länger ausgebildet ist als der andere vertikale Schenkel, oder wenn das Formteil 11 als massiver Block ohne die mit Beton auszufüllende zentrale Aussparung ausgebildet ist.

Eine weitere Möglichkeit, durch welche sich die für die Montage eines Vorbau-Rolladensystems zu treffenden Vorkehrungen und die Montage des Vorbau-Rolladensystems selbst vereinfachen und beschleunigen lassen, besteht darin, daß zur Führung der elektrischen Leitungen 141, des Gurtes 142, oder der Kette 143 in den Rolladenkasten 6 die vorstehend bereits erwähnte Multifunktionsdose 14 verwendet wird. Die Multifunktionsdose 14 kann alle genannten Funktionen erfüllen, so daß es nicht passieren kann, daß die falsche Führungsvorrichtung oder die falsche Führungsvorrichtung an der falschen Stelle montiert wird. Die Multifunktionsdose 14 gestattet es dem Benutzer darüber hinaus, das Rolladensystem nachträglich zu modifizieren. Beispielsweise ist es möglich, von einer manuellen Auf- und Abbewegung des Rolladens 7 mittels des Gurtes 142 auf eine Bewegung durch einen Elektromotor umzustellen. Ferner ist es beispielsweise möglich, in den Rolladenkasten nachträglich einen Sonnenschutzrollo / ein Insektenschutzgitter 8 und die zur Auf- und Abbewegung erforderliche Kette einzubauen.

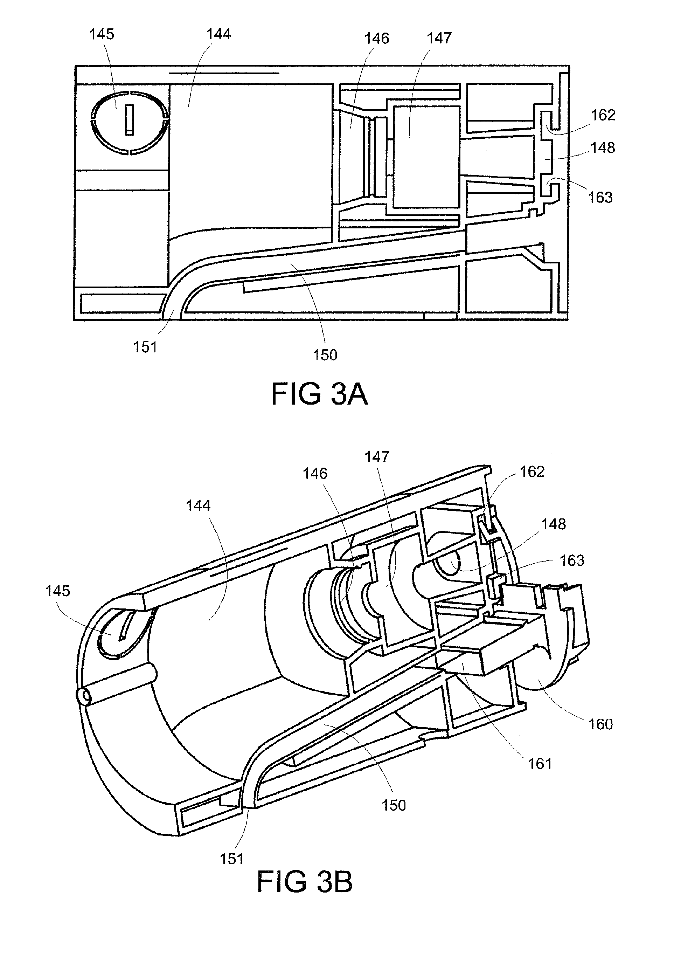

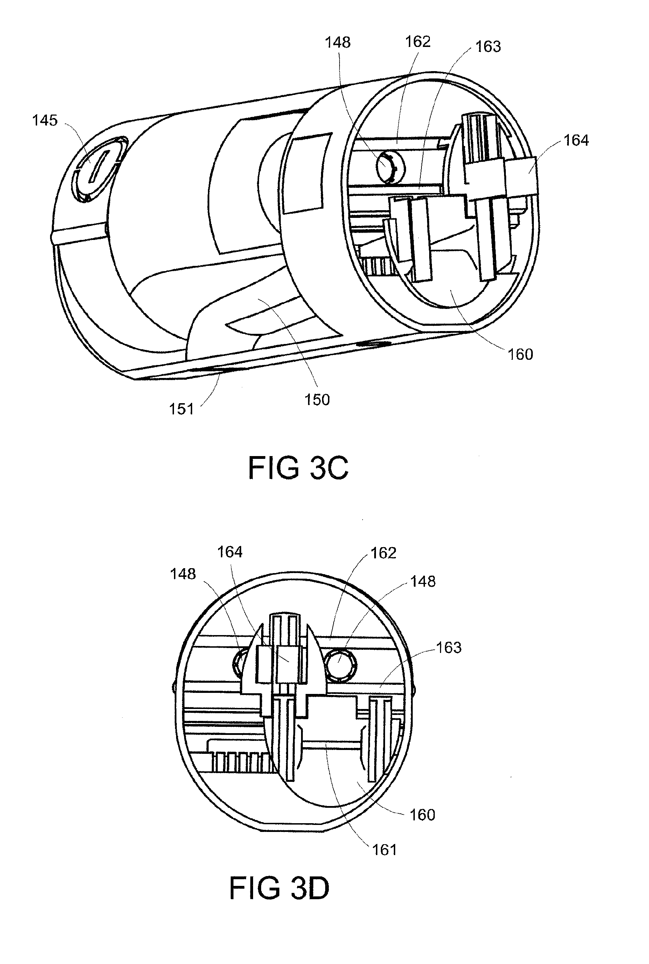

Die Multifunktionsdose 14 ist in den Figuren 2B bis 2D im Querschnitt gezeigt. Sie ist ferner in den Figuren 3A bis 3D gezeigt.

Die Multifunktionsdose 14 besteht im betrachteten Beispiel aus Kunststoff, kann aber auch aus einem beliebigen anderen Material bestehen.

Die Multifunktionsdose 14 ist im betrachteten Beispiel aus zwei symmetrisch aufgebauten Halbschalen und einem im folgenden als Justierelement bezeichneten Element zusammengesetzt.

Die Multifunktionsdose 14 weist im betrachteten Beispiel eine im wesentlichen zylindrische Form mit ovalem Querschnitt auf. Die Multifunktionsdose 14 könnte aber auch einen kreisförmigen, einen rechteckigen, einen quadratischen, oder einen beliebigen anderen Querschnitt aufweisen. Die Länge der Multifunktionsdose 14 entspricht vorzugsweise der Länge der im Formteil 11 vorgesehenen Aussparung 13, in welche die Multifunktionsdose 14 eingesetzt wird. Die Multifunktionsdose 14 hat ein vorderes Ende und ein hinteres Ende, wobei das vordere Ende das dem Gebäude-Inneren zugewandte Ende der Multifunktionsdose 14 ist, und wobei das hintere Ende das dem Rolladenkasten 6 zugewandte Ende der Multifunktionsdose 14 ist.

Die Multifunktionsdose 14 weist im vorderen Bereich eine von der Wandinnenseite 3 her zugängliche erste Kammer 144 auf. Die die Kammer 144 seitlich begrenzende Außenwand der Multifunktionsdose 14 weist herausbrechbare Elemente 145 auf. Bricht man eines oder mehrere dieser Elemente 145 heraus, entstehen in der die Kammer 144 seitlich begrenzenden Außenwand der Multifunktionsdose 14 Öffnungen, über welche von außerhalb der Multifunktionsdose 14 unter Putz zur Multifunktionsdose herangeführte elektrische Leitungen in die erste Kammer 144 geführt werden können. Die erste Kammer 144 ist groß genug, damit darin Lüsterklemmen oder dergleichen Verbindungseinrichtungen untergebracht werden können.

Die erste Kammer 144 verjüngt sich in ihrem hinteren Bereich und hat am Ende des verjüngten Abschnittes 146 einen Boden, in dessen Mitte sich eine Öffnung befindet. Über diese Öffnung ist die erste Kammer 144 mit einer dahinter liegenden zweiten Kammer 147 verbunden ist. Die zweite Kammer 147 weist einen wesentlich geringeren Durchmesser und eine wesentlich geringere Länge auf als die erste Kammer 144. Sie weist jedoch einen erheblich größeren Durchmesser auf als die Öffnung, über welche sie mit der ersten Kammer 144 verbunden ist.

Die zweite Kammer 147 hat einen Boden, in dessen Mitte sich eine Öffnung befindet, über welche die zweite Kammer 147 mit einer am hinteren Ende der Multifunktionsdose 14 liegenden Kabelaustrittsöffnung 148 verbunden ist. Die im Boden der zweiten Kammer 147 vorgesehenen Öffnung hat einen wesentlich geringeren Durchmesser als die zweite Kammer 147.

Um die elektrischen Leitungen, die über die seitlichen Öffnungen der ersten Kammer 144 in diese hineingeführt werden, in den Rolladenkasten 6 zu führen, werden diese über die zweite Kammer 147 und die Kabelaustrittsöffnung 148 in den Rolladenkasten 6 geführt.

Die Multifunktionsdose 14 enthält ferner einen Kanal 150 zur Führung des Gurtes 142 oder der Kette 143 in den Rolladenkasten 6. Der Kanal beginnt im vorderen Bereich der Multifunktionsdose 14. Seine Eintrittsöffnung 151 befindet sich an der Unterseite der Multifunktionsdose 14, kommt im in das Formteil 11 eingebauten Zustand der Multifunktionsdose also an der Unterseite des im Gebäude-Inneren liegenden Teils des Fenstersturzes zu liegen. Über der Eintrittsöffnung 151 wird vorzugsweise eine Gurtführungsvorrichtung mit Umlenkrollen, Bürsten, etc. am Fenstersturz montiert. Der Kanal 150 läuft unterhalb der ersten Kammer 144 und unterhalb der zweiten Kammer 147 an diesen vorbei und endet im hinteren Bereich der Multifunktionsdose 14. Der Kanal 150 weist vorzugsweise zumindest an seinem hinteren Ende eine wesentlich größere Breite auf als es zur Führung des Gurtes 142 und der Kette 143 erforderlich wäre. Diese große Breite ermöglicht es, einen seitlichen Versatz zwischen der Multifunktionsdose 14 und der im Rolladenkasten vorhandenen Gurtwickelvorrichtung zum Aufwickeln des Gurtes 142 bzw. einen seitlichen Versatz zwischen der Multifunktionsdose 14 und dem im Rolladenkasten vorhandenen Kettenantrieb für den Sonnenschutzrollo / das Insektenschutzgitter 8 auszugleichen.

Um sicherzustellen, daß der Gurt 142 zwischen der Multifunktionsdose 14 und der Gurtwickelvorrichtung unter allen Umständen parallel und ohne seitlichen Versatz zur Gurtwickelvorrichtung verläuft, bzw. daß die Kette 143 zwischen der Multifunktionsdose 14 und dem Kettenantrieb unter allen Umständen parallel und ohne seitlichen Versatz zum Kettenantrieb verläuft, ist am hinteren Ende der Multifunktionsdose das vorstehend bereits erwähnte Justierelement vorgesehen. Das Justierelement ist in den Figuren mit dem Bezugszeichen 160 bezeichnet.

Das Justierelement 160 enthält eine vom Gurt 142 bzw. der Kette 143 durchlaufene Austrittsöffnung 161 und ist relativ zum Rest der Multifunktionsdose 14 in horizontaler Richtung (quer zum Kanal 150) verschiebbar. Das Justierelement 160 wird in am hinteren Ende der Multifunktionsdose 14 vorgesehenen, horizontal verlaufenden Schienen 162 und 163 geführt. Somit kann das Justierelement 160 durch ein entsprechendes seitliches Verschieben in eine Position gebracht werden, in welcher die Austrittsöffnung 161 und die Gurtwickelvorrichtung bzw. die Austrittsöffnung 161 und der Kettenantrieb einander ohne seitlichen Versatz genau gegenüberliegen.

Die Austrittsöffnung 161 weist eine etwa der Breite des Gurtes 142 entsprechende Breite auf. Wenn das Justierelement 160 durch ein entsprechendes seitliches Verschieben in eine Position gebracht ist, in welcher die Austrittsöffnung 161 und die Gurtwickelvorrichtung bzw. die Austrittsöffnung 161 und der Kettenantrieb einander ohne seitlichen Versatz genau gegenüberliegen, verläuft der Gurt 142 zwischen der Multifunktionsdose 14 und der Gurtwickelvorrichtung unter allen Umständen parallel und ohne seitlichen Versatz zur Gurtwickelvorrichtung, bzw. verläuft die Kette 143 zwischen der Multifunktionsdose 14 und dem Kettenantrieb unter allen Umständen parallel und ohne seitlichen Versatz zum Kettenantrieb.

Es kann sich als vorteilhaft erweisen, wenn das Justierelement 160 zusätzlich oder alternativ in vertikaler Richtung verschiebbar ist. In diesem Fall müßten zusätzlich zu den horizontalen Schienen 162, 163 oder anstatt der horizontalen Schienen vertikale Schienen an der Rückseite der Multifunktionsdose 14 vorgesehen werden.

Am Justierelement 160 ist eine Befestigungsvorrichtung anbringbar, mit Hilfe welcher das Justierelement 160 am Rolladenkasten 6 oder einer darin untergebrachten Komponente des Rolladensystems verbunden werden kann. Als Befestigungsvorrichtung wird im betrachteten Beispiel eine beispielsweise aus Metall gefertigte Klammer 164 verwendet. Es dürfte einleuchten und bedarf keiner näheren Erläuterung, daß als Befestigungsvorrichtung auch eine beliebige andere Vorrichtung verwendet werden kann. Die Komponente, mit welcher die am Justierelement angebrachte Befestigungsvorrichtung verbunden wird, ist vorzugsweise eine Komponente, die eine vorbestimmte und nicht veränderbare Relativlage zur Gurtwickelvorrichtung bzw. zum Kettenantrieb aufweist. Durch die Befestigungsvorrichtung kann somit sichergestellt werden, daß das Justierelement 160 unter allen Umständen automatisch optimal positioniert ist und seine Position nicht selbständig verändern kann.

Wie aus der vorstehenden Beschreibung und den Figuren ersichtlich ist, weist die Multifunktionsdose 14 neben den vorstehend explizit erwähnten Komponenten einen oder mehrere Hohlräume auf. Diese Hohlräume werden vorzugsweise mit einem wärmedämmenden Material befüllt. Als wärmedämmendes Material kann beispielsweise ein PU-Schaum verwendet werden. In diesem Fall sind zum Befüllen des Hohlraumes oder der Hohlräume eine oder mehrere Schaumeinfüllöffnungen vorgesehen, die im in die Aussparung 13 eingesetzten Zustand der Multifunktionsdose 14 von der Wandinnenseite 3 her zugänglich sind, und über welche in den einen oder die mehreren Hohlräume der PU-Schaum eingefüllt werden kann.

Vorzugsweise sind in denjenigen Teilen der seitlichen Außenflächen der Multifunktionsdose 14, die an mit PU-Schaum zu befüllende Hohlräume angrenzen, Öffnungen vorgesehen, über welche in die Hohlräume eingefüllter PU-Schaum seitlich aus der Multifunktionsdose austreten kann. Dies hat den positiven Effekt, daß die Multifunktionsdose 14 mittels des seitlich aus ihr austretenden PU-Schaums in den Ausnehmungen 13 des Formteils 11 befestigt werden kann, und keine anderweitige Befestigung mehr erforderlich ist.

Es erweist sich als vorteilhaft, wenn in die zweite Kammer 147 ein Dichtungselement eingesetzt wird. Dieses Dichtungselement kann beispielsweise ein die zweite Kammer 147 vollständig ausfüllender Schaumstoffeinsatz sein, der einen in radialer Richtung verlaufenden und sich vom äußeren Rand bis zum Mittelpunkt des Schaumstoffeinsatzes erstreckenden Einschnitt aufweist. Ein solcher Schaumstoffeinsatz verhindert nicht, daß durch die zweite Kammer 147 elektrische Leitungen geführt werden. Die elektrischen Leitungen können in dem im Schaumstoffeinsatz vorhandenen Einschnitt zu liegen kommen und die zweite Kammer über diesen Einschnitt passieren. Der Schaumstoffeinsatz schmiegt sich eng an die durch ihn geführten elektrischen Leitungen an und verhindert daß aus dem Gebäude-Inneren über die Multifunktionsdose 14 Wärme in den Rolladenkasten 6 entweichen kann.

Die vorstehend vorgestellten Rolladensytem-Komponenten erweisen sich unabhängig von den Einzelheiten der praktischen Realisierung als vorteilhaft: durch diese lassen sich die für die Montage eines Vorbau-Rolladensystems zu treffenden Vorkehrungen und die Montage des Vorbau-Rolladensystems selbst erheblich vereinfachen und beschleunigen. Darüber hinaus kann eine hervorragende Wärme- und Schalldämmung erzielt werden.

### Bezugszeichenliste

- 1: Fenstersturz
- 2: Wandaußenseite
- 3: Wandinnenseite
- 4: Aussparung in 1
- 5: Fensterrahmen
- 6: Rolladenkasten
- 7: Rolladen
- 8: Sonnenschutzrollo / Insektengitter
- 9: Putzschichten
- 11: Formteil
- 12: Aussparung in 11
- 13: weitere Aussparung in 11
- 14: Multifunktionsdose
- 141: elektrische Leitung
- 142: Gurt
- 143: Kette
- 144: erste Kammer
- 145: herausbrechbares Element
- 146: verjüngtes hinteres Ende von 144
- 147: zweite Kammer
- 148: Kabelaustrittsöffnung
- 150: Kanal
- 151: Eintrittsöffnung
- 160: Justierelement
- 161: Austrittsöffnung
- 162: Schiene
- 163: Schiene
- 164: Klammer

## Patentansprüche

1. Fenstersturz insbesondere für ein Rolladensystem, bei welchem der Rolladenkasten (6) vor das Fenster in die Laibung gesetzt wird, mit einer Aussparung (4; 12) zur Aufnahme wenigstens eines Teils des Rolladenkastens (6),
**dadurch gekennzeichnet ,**
**daß** zumindest der die Aussparung (4; 12) enthaltende Teil des Fenstersturzes (1) durch ein aus Kunststoff bestehendes Formteil (11) gebildet wird.

2. Fenstersturz nach Anspruch 1,
**dadurch gekennzeichnet ,**
**daß** das Formteil (11) durch ein die Aussparung (4; 11) enthaltendes U-Profil gebildet wird.

3. Fenstersturz nach Anspruch 2,
**dadurch gekennzeichnet ,**
**daß** der der Wandaußenseite (2) zugewandte vertikale Schenkel länger ist als der andere vertikale Schenkel.

4. Fenstersturz nach Anspruch 1,
**dadurch gekennzeichnet ,**
**daß** das Formteil (11) durch einen die Aussparung (4; 11) enthaltenden massiven Block gebildet wird.

5. Fenstersturz nach Anspruch 1,
**dadurch gekennzeichnet ,**
**daß** das Formteil (11) wenigstens eine weitere Aussparung (13) zur Aufnahme einer Anordnung enthält, über welche von der Gebäude-Innenseite elektrische Leitungen (141) durch den Fenstersturz (1) hindurch in den Rolladenkasten (6) geführt werden können.

6. Fenstersturz nach Anspruch 1,
**dadurch gekennzeichnet ,**
**daß** das Formteil (11) wenigstens eine weitere Aussparung (13) zur Aufnahme einer Anordnung enthält, über welche von der Gebäude-Innenseite ein Gurt (142) für die Bewegung eines im Rolladenkasten (6) enthaltenen Rolladens (7) durch den Fenstersturz (1) hindurch in den Rolladenkasten (6) geführt werden kann.

7. Fenstersturz nach Anspruch 1,
**dadurch gekennzeichnet ,**
**daß** das Formteil (11) wenigstens eine weitere Aussparung (13) zur Aufnahme einer Anordnung enthält, über welche von der Gebäude-Innenseite eine Kette (143) für die Bewegung eines im Rolladenkasten (6) enthaltenen Sonnenschutzrollos oder Insektenschutzgitters (8) durch den Fenstersturz (1) hindurch in den Rolladenkasten (6) geführt werden kann.

8. Fenstersturz nach einem der Ansprüche 5 bis 7,
**dadurch gekennzeichnet ,**
**daß** das Formteil (11) zwei weitere Aussparungen (13) enthält, wobei die erste weitere Aussparung (13) so angeordnet ist, daß sie am linken Ende des Rolladenkastens (6) in diesen mündet, und wobei die zweite weitere Aussparung (13) so angeordnet ist, daß sie am rechten Ende des Rolladenkastens (6) in diesen mündet.

9. Fenstersturz nach einem der Ansprüche 5 bis 8,
**dadurch gekennzeichnet ,**
**daß** die mindestens eine weitere Aussparung (13) zur Aufnahme einer Multifunktionsdose (14) ausgelegt ist, über welche wahlweise die elektrischen Leitungen (141), der Gurt (142), oder die Kette (143) durch den Fenstersturz (1) hindurch in den Rolladenkasten (6) geführt werden können.

10. Fenstersturz nach einem der Ansprüche 5 bis 9,
**dadurch gekennzeichnet ,**
**daß** die weitere Aussparung (13) so weit unten im Formteil (11) vorgesehen ist, daß die Anordnung, zur Aufnahme welcher die weitere Aussparung (13) vorgesehen ist, im in die weitere Aussparung (13) eingesetzten Zustand auf dem Rahmen eines unter dem Fenstersturz eingebauten Fensters zu liegen kommen kann.

11. Fenstersturz nach Anspruch 1,
**dadurch gekennzeichnet ,**
**daß** das Formteil (11) eine mit Beton oder einem sonstigen Baustoff ausfüllbare Ausnehmung aufweist.

12. Fenstersturz nach Anspruch 1,
**dadurch gekennzeichnet ,**
**daß** das Formteil (11) durch eine zusammenhängende Einheit gebildet wird.

13. Fenstersturz nach Anspruch 1,
**dadurch gekennzeichnet ,**
**daß** das Formteil (11) einstückig ausgebildet ist.

14. Fenstersturz nach Anspruch 1,
**dadurch gekennzeichnet ,**
**daß** das Formteil (11) aus Polystyrol besteht.

15. Fenstersturz nach Anspruch 1,
**dadurch gekennzeichnet ,**
**daß** das Formteil (11) aus Metallpartikel enthaltendem Polystyrol besteht.

16. Fenstersturz nach Anspruch 1,
**dadurch gekennzeichnet ,**
**daß** das Formteil (11) aus Graphitpartikel enthaltendem Polystyrol besteht.

17. Unterputzdose für die Elektroinstallation, mit einer von vorne zugänglichen Kammer (144), in welche von der Seite und/oder von hinten elektrische Leitungen (141) hineinführbar sind,
**dadurch gekennzeichnet ,**
**daß** in die Unterputzdose ein Kanal (150) integriert ist, über welchen ein Gurt (142) oder eine Kette (143) durch die Unterputzdose (14) hindurchführbar ist.

18. Unterputzdose nach Anspruch 17,
**dadurch gekennzeichnet ,**
**daß** die Unterputzdose (14) dazu ausgelegt ist, elektrische Leitungen (141) und/oder einen Rolladengurt (142) und/oder eine Kette (143) in einen Rolladenkasten (6) zu führen.

19. Unterputzdose nach Anspruch 17,
**dadurch gekennzeichnet ,**
**daß** der Kanal (150) eine im vorderen Bereich der Unterputzdose (14) an der Unterseite derselben vorgesehene Eintrittsöffnung (151) aufweist und die Unterputzdose bis an deren hinteres Ende durchläuft.

20. Führungsvorrichtung, über welche ein Rolladengurt (142) oder eine Kette (143) durch eine Wandöffnung hindurch in einen Rolladenkasten (6) führbar ist, wobei an dem dem Rolladenkasten (6) zugewandten Ende der Führungsvorrichtung (14) eine vom Rolladengurt (142) oder der Kette (143) durchlaufene Austrittsöffnung (161) vorgesehen ist,
**dadurch gekennzeichnet ,**
**daß** die Austrittsöffnung (161) Bestandteil eines Justierelementes (160) ist, welches relativ zum Rest der Führungsvorrichtung (14) verschiebbar ist.

21. Führungsvorrichtung nach Anspruch 20,
**dadurch gekennzeichnet ,**
**daß** das Justierelement (160) in horizontaler Richtung und/oder in vertikaler Richtung verschiebbar ist.

22. Führungsvorrichtung nach Anspruch 20,
**dadurch gekennzeichnet ,**
**daß** an dem dem Rolladenkasten (6) zugewandten Ende der Führungsvorrichtung (14) in horizontaler Richtung und/oder in vertikaler Richtung verlaufende Schienen (162, 163) vorgesehen sind, und daß das Justierelement (160) in diesen Schienen geführt wird.

23. Führungsvorrichtung nach Anspruch 20,
**dadurch gekennzeichnet ,**
**daß** am Justierelement (160) eine Befestigungsvorrichtung (164) vorgesehen ist, mittels welcher das Justierelement (160) mit dem Rolladenkasten (6) oder einer darin untergebrachten Komponente des Rolladensystems verbunden und gegen ein Verschieben gesichert werden kann.

24. Führungsvorrichtung nach Anspruch 23,
**dadurch gekennzeichnet ,**
**daß** die Komponente, mit welcher das Justierelement (160) über die Befestigungsvorrichtung (164) verbunden wird, eine Komponente ist, die eine vorbestimmte und nicht veränderliche Relativlage zu einer im Rolladenkasten (6) untergebrachten Gurtwickelvorrichtung aufweist, auf welche der durch die Führungsvorrichtung (14) geführte Gurt (142) aufgewickelt wird.

25. Führungsvorrichtung nach Anspruch 23,
**dadurch gekennzeichnet ,**
**daß** die Komponente, mit welcher das Justierelement (160) über die Befestigungsvorrichtung (164) verbunden wird, eine Komponente ist, die eine vorbestimmte und nicht veränderliche Relativlage zu einem im Rolladenkasten (6) untergebrachten Kettenantrieb aufweist, mit welchem die durch die Führungsvorrichtung (14) geführte Kette (143) verbunden ist.

26. Führungsvorrichtung nach Anspruch 23,
**dadurch gekennzeichnet ,**
**daß** die Befestigungsvorrichtung (164) durch eine Klammer gebildet wird.

27. Führungsvorrichtung nach einem der Ansprüche 20 bis 26,
**dadurch gekennzeichnet ,**
- **daß** die Führungsvorrichtung einen Kanal (150) zur Führung des Rollladengurtes (142) oder der Kette (143) durch die Wandöffnung hindurch aufweist,
- **daß** das Justierelement (160) so angeordnet ist, daß die darin vorgesehene Austrittsöffnung (161) vor dem dem Rollladenkasten zugewandten hinteren Ende des Kanals (150) zu liegen kommt, und
- **daß** die Breite der Austrittsöffnung (161) geringer ist als die Breite des Kanals (150) an seinem dem Rollladenkasten zugewandten hinteren Ende, so daß durch ein Verschieben des Justierelementes (160) sowohl der Verlauf des Gurtes (142) oder der Kette (143) zwischen der Austrittsöffnung (161) und dem Rollladenkasten als auch der Verlauf des Gurtes (142) oder der Kette (143) innerhalb des Kanals (150) veränderbar sind.
